# EUROPEAN PATENT APPLICATION

(11) **EP 3 817 164 A1**
(43) Date of publication of application: **05.05.2021**
(21) Application number: 19206900.3
(22) Date of filing: 04.11.2019
(51) Int. Cl.: H02B 1/56

(54) **A THERMAL LINK**

(71) Applicant: ABB Schweiz AG, 5400 Baden (CH)
(72) Inventor: SHANG, Wenkai, 40878 Ratingen (DE); GENTSCH, Dietmar, 40882 Ratingen (DE); REUBER, Christian, 47877 Willich (DE); THEVAR, Dukkaiappan Subbiah, 40489 Düsseldorf (DE); YANG, Yelle-ChangZhou, Xiamen, Fujian 361006 (CN); XU, Jane-LiMing, Xiamen, Fujian 361000 (CN); WEN, Juan, Beijing, Beijing 10076 (CN); CHEN, YanGuo, Xiamen, Fujian 361006 (CN); BIERI, Andre, Xiamen, Fujian 361000 (CN); HUANG, LiQun, Xiamen, Fujian 361006 (CN)
(74) Representative: Maiwald Patent- und Rechtsanwaltsgesellschaft mbH

(57) **Abstract**

The present invention relates to a thermal link (1) for a medium voltage switchgear. The thermal link comprises an electrically conducting part (10), an inner electrically insulating part (20), and an outer electrically insulating part (30). The electrically conducting part is thermally conducting. The inner electrically insulating part is thermally conducting. The electrically conducting part comprises a first end portion comprising a first outer surface and a second end portion comprising a second outer surface and between the first end portion and the second end portion the electrically conducting part comprises a third outer surface. The inner electrically insulating part comprises a first end portion comprising a first outer surface and a second end portion comprising a second outer surface and between the first end portion and the second end portion the inner electrically insulating part comprises a third outer surface. The outer electrically insulating part comprises an inner surface. The first outer surface of the electrically conducting part is in thermal contact with a surface of a grounded part of a switchgear. The second outer surface of the electrically conducting part is in thermal contact with the first outer surface of the inner electrically insulating part. The second surface of the inner electrically insulating part is in thermal contact with a surface of a current carrying part of the switchgear. A first portion of the inner surface of the outer insulating part is in contact with a first portion of the third outer surface of the electrically conducting part.

## Description

### FIELD OF THE INVENTION

The present invention relates to a thermal link for a switchgear, such as an air-insulated switchgear or a gas-insulated switchgear for medium voltage applications.

### BACKGROUND OF THE INVENTION

Electric Switchgears guide electrical currents and therefore generate ohmic losses, resulting in temperature rises. Standards set limits for the permitted temperature rise. In many applications it is desirable to conduct this heat away from the location of generation to other parts of the switchgear that have lower temperatures. So, it can be avoided to exceed the temperature limits or to increase the current that can be carried with permitted temperature rise. Heat transport away from its origin, e.g. a conductor, works by conduction of heat, by radiation and by convection. For the fixation of conductors, usually insulators or insulating bushings made for example epoxy are used. However, insulating materials like the widely used epoxy have a low thermal conductivity, and consequently the conduction of thermal energy away from its origin is not effective.

There is a need to address this issue.

### SUMMARY OF THE INVENTION

Therefore, it would be advantageous to have an improved ability to extract thermal energy from current carrying parts of a switchgear that leads to the generation of heat. The object of the present invention is solved with the subject matter of the independent claims, wherein further embodiments are incorporated in the dependent claims.

In a first aspect, there is provided a thermal link for a medium voltage switchgear, the thermal link comprising:
- an electrically conducting part;
- an inner electrically insulating part; and
- an outer electrically insulating part.

The electrically conducting part is thermally conducting. The inner electrically insulating part is thermally conducting. The electrically conducting part comprises a first end portion comprising a first outer surface and a second end portion comprising a second outer surface and between the first end portion and the second end portion the electrically conducting part comprises a third outer surface. The inner electrically insulating part comprises a first end portion comprising a first outer surface and a second end portion comprising a second outer surface and between the first end portion and the second end portion the inner electrically insulating part comprises a third outer surface. The outer electrically insulating part comprises an inner surface. The first outer surface of the electrically conducting part is in thermal contact with a surface of a grounded part of a switchgear. The second outer surface of the electrically conducting part is in thermal contact with the first outer surface of the inner electrically insulating part. The second surface of the inner electrically insulating part is in thermal contact with a surface of a current carrying part of the switchgear. A first portion of the inner surface of the outer insulating part is in contact with a first portion of the third outer surface of the electrically conducting part.

In an example, a second portion of the inner surface of the outer insulating part is spaced from a first portion of the third outer surface of the inner electrically insulating part.

In an example, the first portion of the inner surface of the outer insulating part is in mechanical contact with the first portion of the third outer surface of the electrically conducting part.

In an example, the electrically conducting part is cast in the outer electrically insulating part.

In an example, at least a part of the first portion of the third outer surface of the electrically conducting part is roughened.

In an example, at least a part of the first portion of the third outer surface of the electrically conducting part comprises ridges.

In an example, at least a part of the first portion of the third outer surface of the electrically conducting part comprises grooves.

In an example, the second portion of the inner surface of the outer insulating part is spaced from a junction between the second outer surface of the electrically conducting part and the first outer surface of the inner electrically insulating part.

In an example, the space between the second portion of the inner surface of the outer insulating part and the first portion of third outer surface of the inner electrically insulating part is filled with a potting material.

In an example, the space at the junction between the second outer surface of the electrically conducting part and the first outer surface of the inner electrically insulating part is filled with a potting material.

In an example, the potting material is flexible.

In an example, the potting material comprises silicone.

In an example, the outer electrically insulating part comprises a first end portion comprising a first outer surface and comprises a second end portion comprising a second outer surface, and the second outer surface of the outer electrically insulating part is spaced from the surface of the current carrying part of the switchgear.

In an example, the thermal link is configured such that the second outer surface of the electrically conducting part is forced against the first outer surface of the inner electrically insulating part via a connection between the current carrying part of the switchgear and the second portion of the outer electrically insulating part.

In an example, the thermal link is configured such that the second surface of the inner electrically insulating part is forced against the surface of the current carrying part of the switchgear via a connection between the current carrying part of the switchgear and the second portion of the outer electrically insulating part.

In an example, the connection between the current carrying part of the switchgear and the second portion of the outer electrically insulating part comprises at least one screwed linkage.

In an example, tightening of the at least one screwed linkage is configured to force the second outer surface of the electrically conducting part against the first outer surface of the inner electrically insulating part and/or tightening of the at least one screwed linkage is configured to force the second surface of the inner electrically insulating part against the surface of the current carrying part of the switchgear.

In an example, the at least one screwed linkage comprises at least one spring washer.

In an example, the first outer surface of the outer electrically insulating part is in contact with the grounded part of the switchgear.

In an example, the electrically conducting part is fixed to the grounded part of the switchgear via a screwed linkage.

In an example, an outer surface of the outer electrically insulating part comprises grooves.

In an example, an outer surface of the outer electrically insulating part comprises ridges.

In an example, the first outer surface of the electrically conducting part, the second outer surface of the electrically conducting part, the first outer surface of the inner electrically insulating part, and the second outer surface of the inner electrically insulating part exhibit a low roughness.

In an example, the thermal contact between the first outer surface of the electrically conducting part and the surface of the grounded part of the switchgear comprises utilization of a heat conductive paste.

In an example, the thermal contact between the second outer surface of the electrically conducting part and with the first outer surface of the inner electrically insulating part comprises utilization of a heat conductive paste.

In an example, the thermal contact between the second surface of the inner electrically insulating part and the surface of the current carrying part of the switchgear comprises utilization of a heat conductive paste.

In an example, the heat conductive paste comprises a liquid metal.

In an example, the thermal link comprises a heat sink in thermal contact with the electrically conducting part.

In an example, the heatsink is mounted to a second surface of the grounded part of the switchgear. The second surface of the grounded part is directly opposing the first surface of the grounded part to which the first outer surface of the electrically conducting part is connected.

In an example, thermal contact between the heatsink and the electrically conducting part comprises utilization of a heat conductive paste between the heatsink and the second surface of the grounded part of the switchgear.

In an example, the electrically conducting part comprises aluminium and/or copper.

In an example, the inner electrically insulating part comprises a ceramic.

In an example, the ceramic is Silicon carbide, Aluminium nitride, or Aluminium oxide.

In an example, the outer electrically insulating part comprises epoxy and/or thermoplastic.

In an example, the grounded part of the switchgear is a wall of the switchgear.

In an example, the wall is an outer wall of the switchgear.

In an example, the current carrying part of the switchgear is a busbar.

In an example, the inner electrically insulating part is cylindrically shaped.

In an example, the current carrying part of the switchgear is at least partially positioned at a central axis of the inner electrically insulating part.

In an example, the electrically conducting part is cylindrically shaped.

In a second aspect, there is provided a switchgear comprising at least one thermal link according to the first aspect.

In a third aspect, there is provided a thermal link for a medium voltage switchgear, the thermal link comprising:
- an electrically conducting part;
- an inner electrically insulating part; and
- an outer electrically insulating part.

The electrically conducting part is thermally conducting. The inner electrically insulating part is thermally conducting. The electrically conducting part comprises a first end portion and comprises a second end portion comprising a first outer surface and between the first end portion and the second end portion the electrically conducting part comprises a second outer surface. The inner electrically insulating part comprises a first end portion comprising a first outer surface and comprises a second end portion and between the first end portion and the second end portion the inner electrically insulating part comprises a third outer surface. The outer electrically insulating part comprises an inner surface. The first end portion of the electrically conducting part is in thermal contact with a current carrying part of a switchgear. The first outer surface of the electrically conducting part is in thermal contact with the first outer surface of the inner electrically insulating part. A first portion of the inner surface of the outer insulating part is in contact with a first portion of the second outer surface of the electrically conducting part.

In an example, the thermal link comprises a heat sink comprising an inward facing surface; wherein the second portion of the inner electrically insulating part comprises a second outer surface; and the inward facing surface of the heat sink is in thermal contact with the second outer surface of the inner electrically insulating part.

In an example, thermal contact between the heatsink and the inner electrically insulating part comprises utilization of a heat conductive paste between the heatsink and the heatsink.

In an example, a second portion of the inner surface of the outer insulating part is spaced from a first portion of the third outer surface of the inner electrically insulating part.

In an example, the first portion of the inner surface of the outer insulating part is in mechanical contact with the first portion of the second outer surface of the electrically conducting part.

In an example, the electrically conducting part is cast in the outer electrically insulating part.

In an example, at least a part of the first portion of the second outer surface of the electrically conducting part is roughened.

In an example, at least a part of the first portion of the second outer surface of the electrically conducting part comprises ridges.

In an example, at least a part of the first portion of the second outer surface of the electrically conducting part comprises grooves.

In an example, the second portion of the inner surface of the outer insulating part is spaced from a junction between the first outer surface of the electrically conducting part and the first outer surface of the inner electrically insulating part.

In an example, the space between the second portion of the inner surface of the outer insulating part and the first portion of the third outer surface of the inner electrically insulating part is filled with a potting material.

In an example, the space at the junction between the first outer surface of the electrically conducting part and the first outer surface of the inner electrically insulating part is filled with a potting material.

In an example, the potting material is flexible.

In an example, the potting material comprises silicone.

In an example, the outer electrically insulating part comprises a first end portion comprising a first outer surface and comprises a second end portion comprising a second outer surface, and the second outer surface of the outer electrically insulating part is spaced from the inward facing surface of the heatsink.

In an example, the thermal link is configured such that the first outer surface of the electrically conducting part is forced against the first outer surface of the inner electrically insulating part via a connection between the heatsink and the second portion of the outer electrically insulating part.

In an example, the thermal link is configured such that the second surface of the inner electrically insulating part is forced against the inward facing surface of the heatsink via a connection between the heatsink and the second portion of the outer electrically insulating part.

In an example, the connection between the heatsink and the second portion of the outer electrically insulating part comprises at least one screwed linkage.

In an example, tightening of the at least one screwed linkage is configured to force the first outer surface of the electrically conducting part against the first outer surface of the inner electrically insulating part and/or tightening of the at least one screwed linkage is configured to force the second surface of the inner electrically insulating part against the inward facing surface of the heatsink.

In an example, the at least one screwed linkage comprises at least one spring washer.

In an example, the first outer surface of the outer electrically insulating part is in contact with the current carrying part of the switchgear.

In an example, the electrically conducting part is fixed to the current carrying part of the switchgear via a screwed linkage.

In an example, an outer surface of the outer electrically insulating part comprises grooves.

In an example, an outer surface of the outer electrically insulating part comprises ridges.

In an example, the first outer surface of the electrically conducting part, the first outer surface of the inner electrically insulating part, and the second outer surface of the inner electrically insulating part exhibit a low roughness.

In an example, the thermal contact between the first outer surface of the electrically conducting part and with the first outer surface of the inner electrically insulating part comprises utilization of a heat conductive paste.

In an example, the heat conductive paste comprises a liquid metal.

In an example, the electrically conducting part comprises aluminium and/or copper.

In an example, the inner electrically insulating part comprises a ceramic.

In an example, the ceramic is Silicon carbide, Aluminium nitride, or Aluminium oxide.

In an example, the outer electrically insulating part comprises epoxy and/or thermoplastic.

In an example, the current carrying part of the switchgear comprises a cable of the switchgear.

In an example, the current carrying part of the switchgear comprises a busbar.

In an example, the inner electrically insulating part is cylindrically shaped.

In an example, the current carrying part of the switchgear is at least partially positioned at a central axis of the inner electrically insulating part.

In an example, the electrically conducting part is cylindrically shaped.

In a fourth aspect, there is provided a bushing for a switchgear comprising at least one thermal link according to the third aspect.

In a fifth aspect, there is provided a switchgear comprising at least one thermal link according to the third aspect.

In a sixth aspect, there is provided a switchgear comprising at least one bushing according to the fourth aspect.

In a seventh aspect, there is provided a method of manufacturing a thermal link for a medium voltage switchgear. The method comprises:
casting a thermally conducting electrically conducting part in an outer electrically insulating part, wherein the electrically conducting part comprises a first end portion comprising a first outer surface and a second end portion comprising a second outer surface and between the first end portion and the second end portion the electrically conducting part comprises a third outer surface, and wherein the casting is such that a first portion of an inner surface of the outer insulating part is in contact with a first portion of the third outer surface of the electrically conducting part;
adding a thermally conducting inner electrically insulating part in the outer electrically insulating part, wherein the inner electrically insulating part comprises a first end portion comprising a first outer surface and a second end portion comprising a second outer surface and between the first end portion and the second end portion the inner electrically insulating part comprises a third outer surface, and wherein the adding is such that the second outer surface of the electrically conducting part is in thermal contact with the first outer surface of the inner electrically insulating part; and
wherein, the first outer surface of the electrically conducting part is configured to be in thermal contact with a surface of a grounded part of a switchgear, and wherein the second surface of the inner electrically insulating part is configured to be in thermal contact with a surface of a current carrying part of the switchgear.

In an example, adding the thermally conducting inner electrically insulating part comprises spacing a second portion of the inner surface of the outer insulating part from a first portion of the third outer surface of the inner electrically insulating part.

In an example, the method comprises spacing the second portion of the inner surface of the outer insulating part from a junction between the second outer surface of the electrically conducting part and the first outer surface of the inner electrically insulating part

In an example, the method comprises filling the space between the second portion of the inner surface of the outer insulating part and the first portion of third outer surface of the inner electrically insulating part with a potting material (42).

In an example, during filling the space, the method comprises pressing the electrically conducting part against the inner electrically insulating part.

In an example, the method comprises filling the space at the junction between the second outer surface of the electrically conducting part and the first outer surface of the inner electrically insulating part is filled with a potting material.

In an example, during filling the space, the method comprises pressing the electrically conducting part against the inner electrically insulating part.

In an example, the potting material is flexible.

In an example, the potting material comprises silicone.

In an example, casting the thermally conducting electrically conducting part in the outer electrically insulating part comprises forming a mechanical contact between the first portion of the inner surface of the outer insulating part and the first portion of the third outer surface of the electrically conducting part.

In an example, the outer electrically insulating part comprises a first end portion comprising a first outer surface and comprises a second end portion comprising a second outer surface, and wherein adding the thermally conducting inner electrically insulating part is such that the first end portion and first outer surface of the thermally conducting inner electrically insulating part extends out of the second end portion of the outer electrically insulating part.

In an example, the method comprises forming at least one screw threaded hole in the second portion of the outer electrically insulating part.

In an example, the method comprises casting the thermally conducting electrically conducting part such that the first outer surface of the electrically conducting part is in the same plane as the first outer surface of the outer electrically insulating part.

In an example, the method comprises forming at least one screw threaded hole in the electrically conducting part.

In an example, the method comprises forming an outer surface of the outer electrically insulating part with grooves.

In an example, the method comprises forming an outer surface of the outer electrically insulating part with ridges.

In an example, the method comprises forming the third surface of the electrically conducting part with grooves.

In an example, the method comprises forming the third surface of the electrically conducting part with ridges.

In an example, the method comprises forming the first outer surface of the electrically conducting part, the second outer surface of the electrically conducting part, the first outer surface of the inner electrically insulating part, and the second outer surface of the inner electrically insulating part to exhibit a low roughness.

In an example, adding the thermally conducting inner electrically insulating part in the outer electrically insulating part comprises utilization of a heat conductive paste between the second outer surface of the electrically conducting part and the first outer surface of the inner electrically insulating part.

In an example, the heat conductive paste comprises a liquid metal.

In an example, the electrically conducting part comprises aluminium and/or copper.

In an example, the inner electrically insulating part comprises a ceramic.

In an example, the ceramic is Silicon carbide, Aluminium nitride, or Aluminium oxide.

In an example, the outer electrically insulating part comprises epoxy and/or thermoplastic.

In an example, the inner electrically insulating part is cylindrically shaped.

In an example, the electrically conducting part is cylindrically shaped.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows a cross-section through an example of a thermal link for a switchgear;
Fig. 2 shows an example of the thermal link shown in Fig. 1;
Fig. 3 shows an example of implementations of the thermal links as shown in Fig. 1;
Fig. 4 shows an example of a thermal link for a switchgear;
Fig. 5 shows an example of a thermal link for a switchgear;
Fig. 6 shows an example of a thermal link for a switchgear;
Fig. 7 shows an example of a thermal link for a switchgear;
Fig. 8 shows an example of a thermal link for a switchgear;
Fig. 9 shows an example of a thermal link for a switchgear;
Fig. 10 shows an example of a thermal link for a switchgear;
Fig. 11 shows an example of a thermal link with an example of a circuit breaker of a switchgear;
Fig. 12 shows an example of the thermal link shown in Fig. 11;
Fig. 13 shows an example of a part of the thermal link shown in Fig. 11;
Fig. 14 shows an example of a thermal link for a switchgear;
Fig. 15 shows an example of a thermal link for a switchgear;
Fig. 16 shows an example of a thermal link for a switchgear;
Fig. 17 shows an example of a thermal link for a switchgear;
Fig. 18 shows an example of a thermal link for a switchgear;
Fig. 19 shows a cross-section of an example of the thermal link shown in Fig. 18;
Fig. 20 shows an example of a switchgear or panel with an example of a thermal link;
Fig. 21 shows an example of a thermal link for a switchgear;
Fig. 22 shows a cross-section through an example of the thermal link shown in Fig. 21;
Fig. 23 shows an example of a thermal link for a switchgear,
Fig. 24 shows an example of a thermal link for a switchgear;
Fig. 25 shows an example of a thermal link for a switchgear;
Fig. 26 shows an example of a thermal link for a switchgear; and
Fig. 27 shows an example of a thermal link for a switchgear.

### DETAILED DESCRIPTION OF EMBODIMENTS

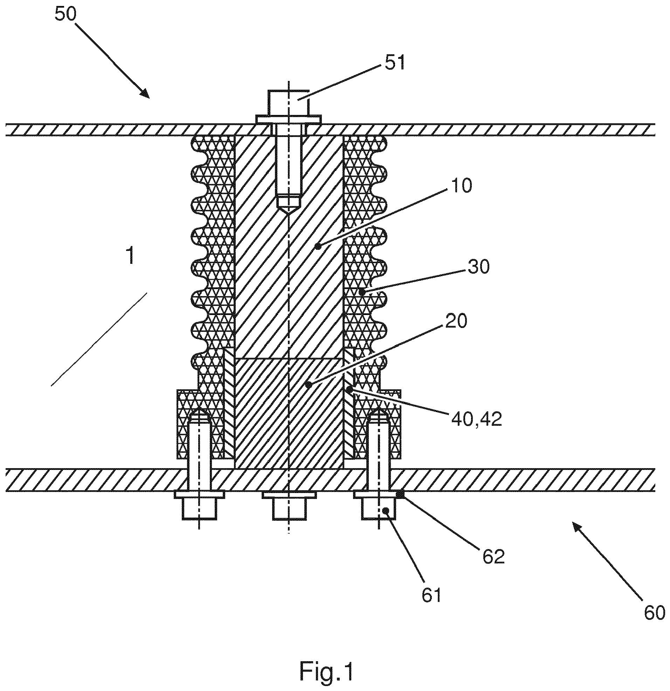

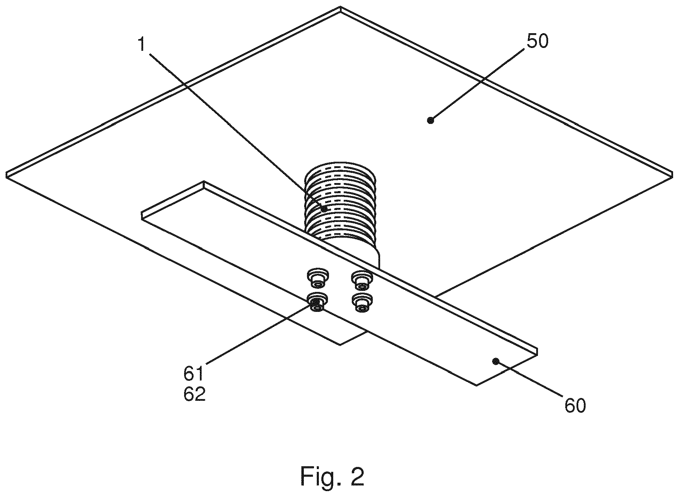

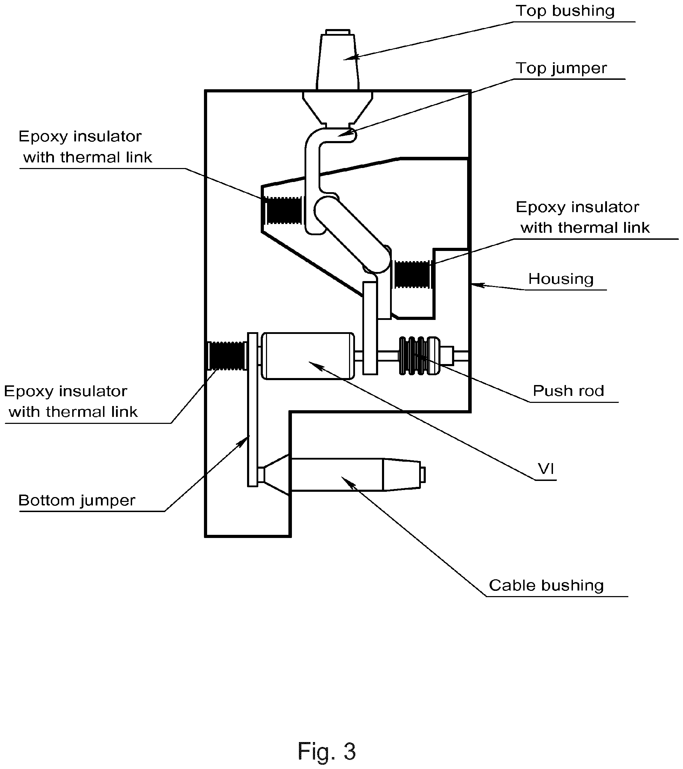

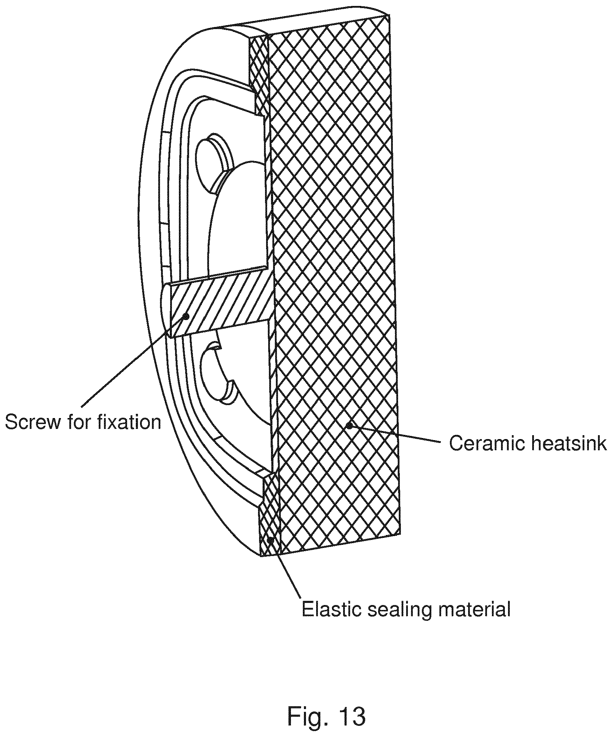

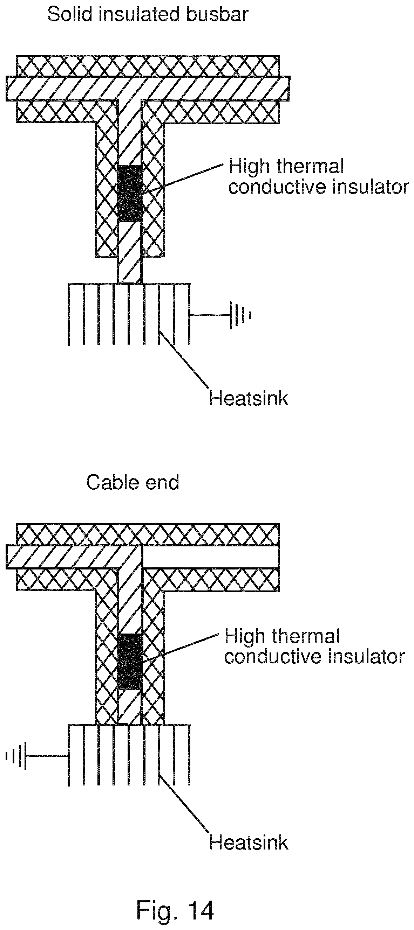

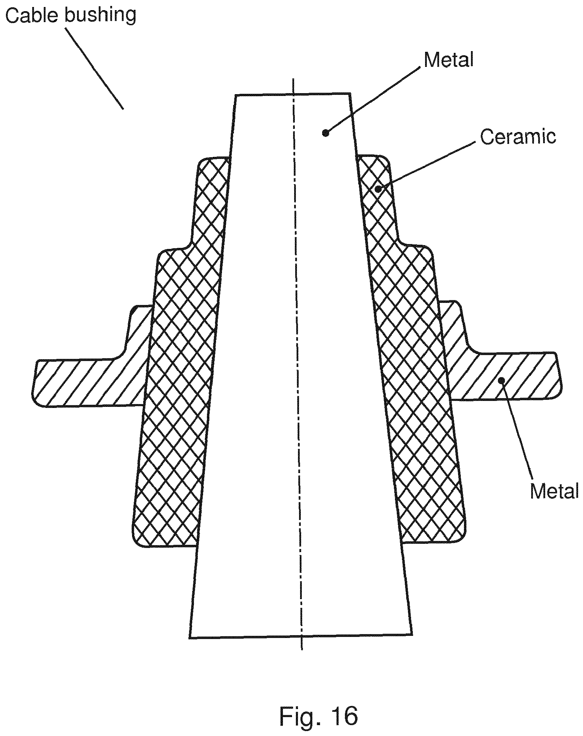

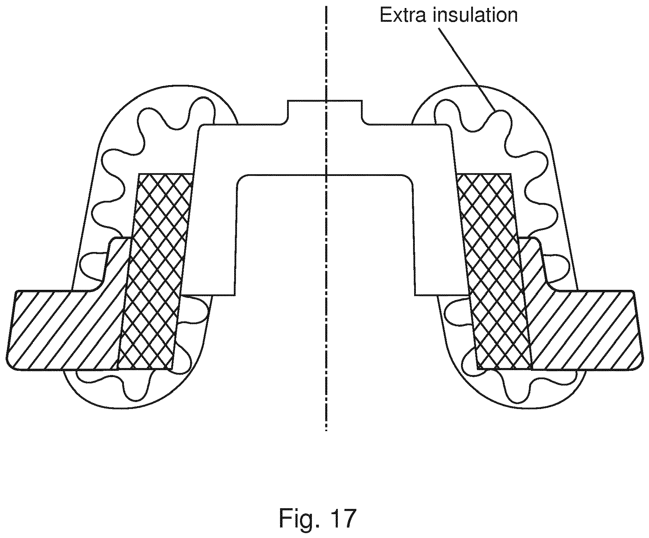

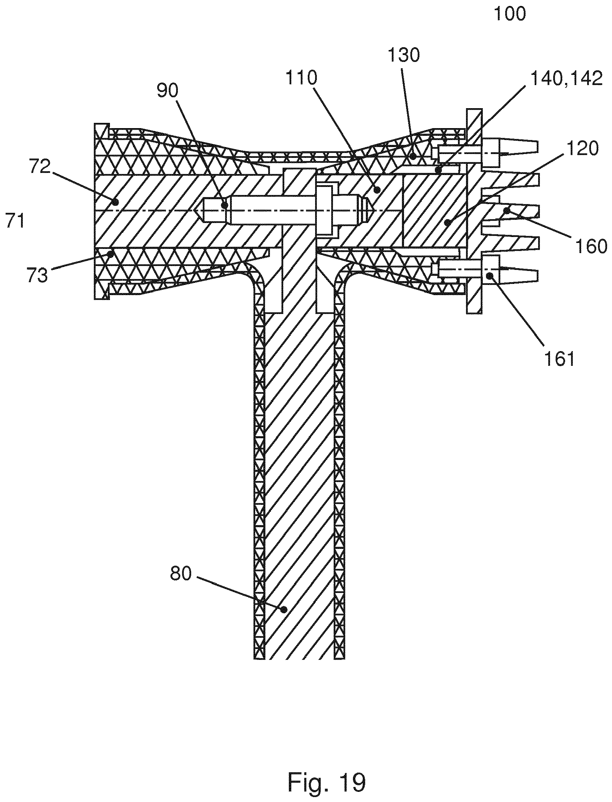

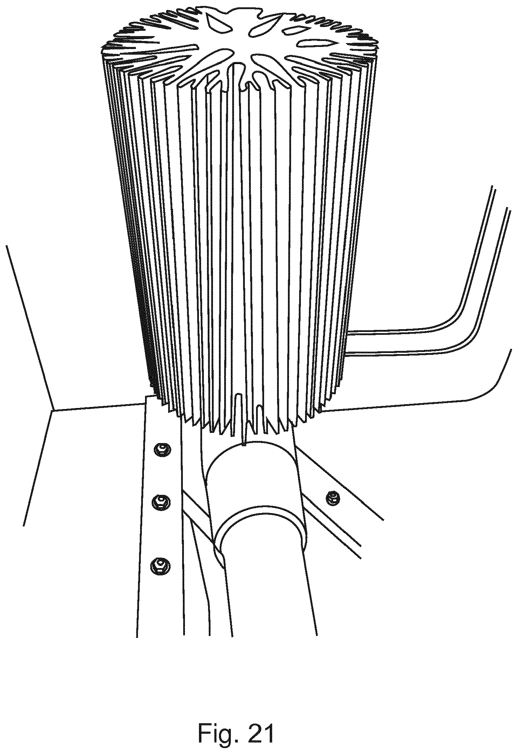

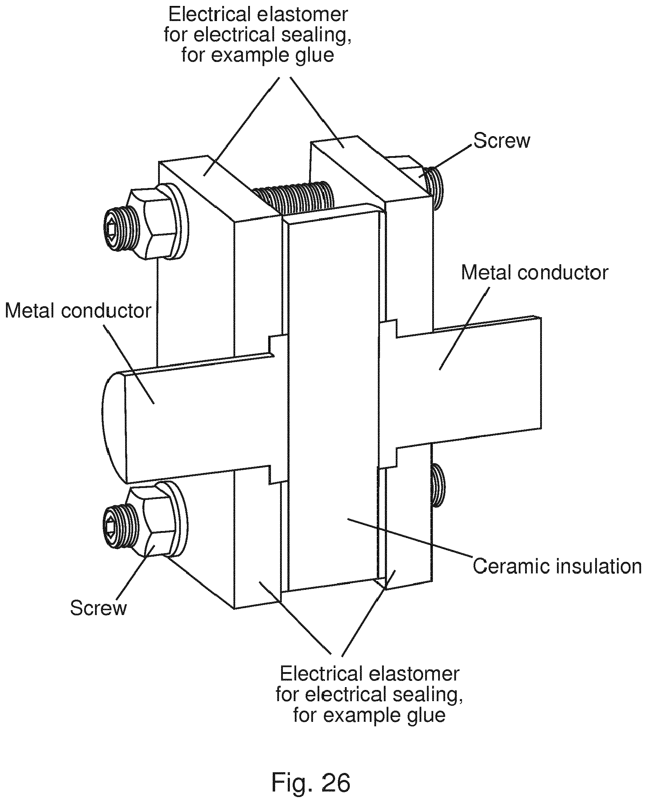

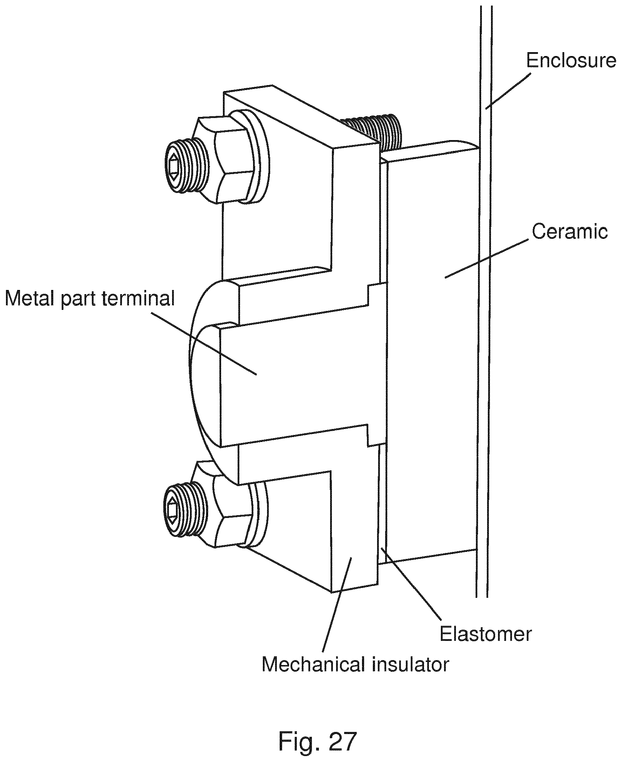

Figs. 1-27 relate to thermal links for a medium voltage switchgear, such as an air-insulated switchgear or a gas-insulated switchgear for medium voltage applications. Reference to thermal link, here could be considered to be reference to a heat sink, where the thermal link can be used to transfer thermal energy away from a location. In the following, Figs. 1-13 relate to a thermal link that connects to an internal current carrying element of a switchgear, such as a cable or busbar, and connects that to an electrically grounded part of the switchgear, such as an exterior wall of the switchgear, in order to provide cooling of the current carrying element. An exemplar implementation is shown in Fig. 3. Figs.14-25 relate to a thermal link associated with a bushing (for example, outside cone, solid insulated busbar and bushing in general), that again has utility for cooling of a current carrying element of a switchgear, such as a cable or busbar and the bushing. Figs. 26-27 show examples of thermal conduction and electrical insulation considerations for the thermal links.

Continuing with Figs. 1-13, in an example there is a thermal link 1 for a medium voltage switchgear. The thermal link comprises an electrically conducting part 10, an inner electrically insulating part 20, and an outer electrically insulating part 30. The electrically conducting part is thermally conducting. The inner electrically insulating part is thermally conducting. The electrically conducting part comprises a first end portion comprising a first outer surface. The electrically conducting part also comprises a second end portion comprising a second outer surface and between the first end portion and the second end portion the electrically conducting part comprises a third outer surface. The inner electrically insulating part comprises a first end portion comprising a first outer surface. The inner electrically insulating part also comprises a second end portion comprising a second outer surface and between the first end portion and the second end portion the inner electrically insulating part comprises a third outer surface. The outer electrically insulating part comprises an inner surface. The first outer surface of the electrically conducting part is in thermal contact with a surface of a grounded part of a switchgear. The second outer surface of the electrically conducting part is in thermal contact with the first outer surface of the inner electrically insulating part. The second surface of the inner electrically insulating part is in thermal contact with a surface of a current carrying part of the switchgear. A first portion of the inner surface of the outer insulating part is in contact with a first portion of the third outer surface of the electrically conducting part.

Here outer surface of a component relates to an outer surface of that particular component, and that outer surface can be in contact with another surface of another element and is therefore internal to the thermal link. Thus outer surface need not be an outer surface of the thermal link itself, but it can be an outer surface of the thermal link.

According to an example, a second portion of the inner surface of the outer insulating part is spaced from a first portion of the third outer surface of the inner electrically insulating part.

According to an example, the first portion of the inner surface of the outer insulating part is in mechanical contact with the first portion of the third outer surface of the electrically conducting part.

According to an example, the electrically conducting part is cast in the outer electrically insulating part.

According to an example, at least a part of the first portion of the third outer surface of the electrically conducting part is roughened.

According to an example, at least a part of the first portion of the third outer surface of the electrically conducting part comprises ridges.

According to an example, at least a part of the first portion of the third outer surface of the electrically conducting part comprises grooves.

According to an example, the second portion of the inner surface of the outer insulating part is spaced from a junction between the second outer surface of the electrically conducting part and the first outer surface of the inner electrically insulating part.

According to an example, the space between the second portion of the inner surface of the outer insulating part and the first portion of third outer surface of the inner electrically insulating part is filled with a potting material 42.

According to an example, the space at the junction between the second outer surface of the electrically conducting part and the first outer surface of the inner electrically insulating part is filled with a potting material.

According to an example, the potting material is flexible.

According to an example, the potting material comprises silicone.

According to an example, the outer electrically insulating part comprises a first end portion comprising a first outer surface and comprises a second end portion comprising a second outer surface. The second outer surface of the outer electrically insulating part is spaced from the surface of the current carrying part of the switchgear.

According to an example, the thermal link is configured such that the second outer surface of the electrically conducting part is forced against the first outer surface of the inner electrically insulating part via a connection between the current carrying part of the switchgear and the second portion of the outer electrically insulating part.

According to an example, the thermal link is configured such that the second surface of the inner electrically insulating part is forced against the surface of the current carrying part of the switchgear via a connection between the current carrying part of the switchgear and the second portion of the outer electrically insulating part.

According to an example, the connection between the current carrying part of the switchgear and the second portion of the outer electrically insulating part comprises at least one screwed linkage 61. Here a screwed linkage can mean one or more screws or bolts, with associated washers.

According to an example, tightening of the at least one screwed linkage is configured to force the second outer surface of the electrically conducting part against the first outer surface of the inner electrically insulating part. Alternatively, or additionally tightening of the at least one screwed linkage is configured to force the second surface of the inner electrically insulating part against the surface of the current carrying part of the switchgear.

According to an example, the at least one screwed linkage comprises at least one spring washer 62.

According to an example, the first outer surface of the outer electrically insulating part is in contact with the grounded part of the switchgear.

According to an example, the electrically conducting part is fixed to the grounded part of the switchgear via a screwed linkage 51.

According to an example, an outer surface of the outer electrically insulating part comprises grooves.

According to an example, an outer surface of the outer electrically insulating part comprises ridges.

Thus, the outer surface of the outer electrically insulating part can be an outer surface of the thermal link, and in addition to providing conductive cooling from the current carrying part to the grounded part of the switchgear, the outer electrically insulating part provides for radiative and convective cooling. The groves and/or ridges provide for an increased surface area and therefore to increased radiative and convective cooling.

According to an example, the first outer surface of the electrically conducting part, the second outer surface of the electrically conducting part, the first outer surface of the inner electrically insulating part, and the second outer surface of the inner electrically insulating part exhibit a low roughness.

According to an example, the thermal contact between the first outer surface of the electrically conducting part and the surface of the grounded part of the switchgear comprises utilization of a heat conductive paste.

According to an example, the thermal contact between the second outer surface of the electrically conducting part and with the first outer surface of the inner electrically insulating part comprises utilization of a heat conductive paste.

According to an example, the thermal contact between the second surface of the inner electrically insulating part and the surface of the current carrying part of the switchgear comprises utilization of a heat conductive paste.

According to an example, the heat conductive paste comprises a liquid metal.

According to an example, the thermal link comprises a heat sink in thermal contact with the electrically conducting part.

According to an example, the heatsink is mounted to a second surface of the grounded part of the switchgear. The second surface of the grounded part is directly opposing the first surface of the grounded part to which the first outer surface of the electrically conducting part is connected. For example, the first and second outer surfaces of the grounded part can be two outer surfaces of a wall of the switchgear.

According to an example, thermal contact between the heatsink and the electrically conducting part comprises utilization of a heat conductive paste between the heatsink and the second surface of the grounded part of the switchgear.

According to an example, the electrically conducting part comprises aluminium and/or copper.

According to an example, the inner electrically insulating part comprises a ceramic.

According to an example, the ceramic is Silicon carbide, Aluminium nitride, or Aluminium oxide.

According to an example, the outer electrically insulating part comprises epoxy and/or thermoplastic.

According to an example, the grounded part of the switchgear is a wall of the switchgear.

According to an example, the wall is an outer wall of the switchgear.

According to an example, the current carrying part of the switchgear is a busbar.

According to an example, the inner electrically insulating part is cylindrically shaped.

According to an example, the current carrying part of the switchgear is at least partially positioned at a central axis of the inner electrically insulating part.

According to an example, the inner electrically conducting part is cylindrically shaped.

Thus, the above example clearly also relate to a switchgear that can comprise at least one thermal link as described above.

In the above examples, the electrically conducting part of the thermal link is in thermal contact with the grounded part of the switchgear, and the inner electrically insulating part is in thermal contact with the current carrying part of the switchgear, and the electrically conducting part and the inner electrically insulating part are in thermal contact with one another. However, in certain circumstances the electrically conducting part of the thermal link can be in thermal contact with the current carrying part of the switchgear, and the inner electrically insulating part can be in thermal contact with the grounded part of the switchgear, and the electrically conducting part and the inner electrically insulating part can again be in thermal contact with one another.

Thus, in this latter example, there is a thermal link 1 for a medium voltage switchgear. The thermal link comprises an electrically conducting part 10, an inner electrically insulating part 20, and an outer electrically insulating part 30. The electrically conducting part is thermally conducting. The inner electrically insulating part is thermally conducting. The electrically conducting part comprises a first end portion comprising a first outer surface. The electrically conducting part also comprises a second end portion comprising a second outer surface and between the first end portion and the second end portion the electrically conducting part comprises a third outer surface. The inner electrically insulating part comprises a first end portion comprising a first outer surface. The inner electrically insulating part also comprises a second end portion comprising a second outer surface and between the first end portion and the second end portion the inner electrically insulating part comprises a third outer surface. The outer electrically insulating part comprises an inner surface. The first outer surface of the electrically conducting part is in thermal contact with a surface of a current carrying part of a switchgear. The second outer surface of the electrically conducting part is in thermal contact with the first outer surface of the inner electrically insulating part. The second surface of the inner electrically insulating part is in thermal contact with a surface of a grounded part of the switchgear. A first portion of the inner surface of the outer insulating part is in contact with a first portion of the third outer surface of the electrically conducting part.

In an example, a second portion of the inner surface of the outer insulating part is spaced from a first portion of the third outer surface of the inner electrically insulating part.

In an example, the first portion of the inner surface of the outer insulating part is in mechanical contact with the first portion of the third outer surface of the electrically conducting part.

In an example, the electrically conducting part is cast in the outer electrically insulating part.

In an example, at least a part of the first portion of the third outer surface of the electrically conducting part is roughened.

In an example, at least a part of the first portion of the third outer surface of the electrically conducting part comprises ridges.

In an example, at least a part of the first portion of the third outer surface of the electrically conducting part comprises grooves.

In an example, the second portion of the inner surface of the outer insulating part is spaced from a junction between the second outer surface of the electrically conducting part and the first outer surface of the inner electrically insulating part.

In an example, the space between the second portion of the inner surface of the outer insulating part and the first portion of third outer surface of the inner electrically insulating part is filled with a potting material 42.

In an example, the space at the junction between the second outer surface of the electrically conducting part and the first outer surface of the inner electrically insulating part is filled with a potting material.

In an example, the potting material is flexible.

In an example, the potting material comprises silicone.

In an example, the outer electrically insulating part comprises a first end portion comprising a first outer surface and comprises a second end portion comprising a second outer surface. The second outer surface of the outer electrically insulating part is spaced from the surface of the grounded part of the switchgear.

In an example, the thermal link is configured such that the second outer surface of the electrically conducting part is forced against the first outer surface of the inner electrically insulating part via a connection between the grounded part of the switchgear and the second portion of the outer electrically insulating part.

In an example, the thermal link is configured such that the second surface of the inner electrically insulating part is forced against the surface of the grounded part of the switchgear via a connection between the grounded part of the switchgear and the second portion of the outer electrically insulating part.

In an example, the connection between the grounded part of the switchgear and the second portion of the outer electrically insulating part comprises at least one screwed linkage 61.

In an example, tightening of the at least one screwed linkage is configured to force the second outer surface of the electrically conducting part against the first outer surface of the inner electrically insulating part. Alternatively or additionally tightening of the at least one screwed linkage is configured to force the second surface of the inner electrically insulating part against the surface of the grounded part of the switchgear.

In an example, the at least one screwed linkage comprises at least one spring washer 62.

In an example, the first outer surface of the outer electrically insulating part is in contact with the current carrying part of the switchgear.

In an example, the electrically conducting part is fixed to the current carrying part of the switchgear via a screwed linkage 51.

In an example, an outer surface of the outer electrically insulating part comprises grooves.

In an example, an outer surface of the outer electrically insulating part comprises ridges.

In an example, the first outer surface of the electrically conducting part, the second outer surface of the electrically conducting part, the first outer surface of the inner electrically insulating part, and the second outer surface of the inner electrically insulating part exhibit a low roughness.

In an example, the thermal contact between the first outer surface of the electrically conducting part and the surface of the current carrying part of the switchgear comprises utilization of a heat conductive paste.

In an example, the thermal contact between the second outer surface of the electrically conducting part and with the first outer surface of the inner electrically insulating part comprises utilization of a heat conductive paste.

In an example, the thermal contact between the second surface of the inner electrically insulating part and the surface of the grounded part of the switchgear comprises utilization of a heat conductive paste.

In an example, the heat conductive paste comprises a liquid metal.

In an example, the thermal link comprises a heat sink in thermal contact with the electrically conducting part.

In an example, the heatsink is mounted to a second surface of the grounded part of the switchgear, wherein the second surface of the grounded part is directly opposing the first surface of the grounded part to which the second outer surface of the inner electrically insulating part is connected.

In an example, thermal contact between the heatsink and the inner electrically insulating part comprises utilization of a heat conductive paste between the heatsink and the second surface of the grounded part of the switchgear.

In an example, the electrically conducting part comprises aluminium and/or copper.

In an example, the inner electrically insulating part comprises a ceramic.

In an example, the ceramic is Silicon carbide, Aluminium nitride, or Aluminium oxide.

In an example, the outer electrically insulating part comprises epoxy and/or thermoplastic.

In an example, the grounded part of the switchgear is a wall of the switchgear.

In an example, the wall is an outer wall of the switchgear.

In an example, the current carrying part of the switchgear is a busbar.

In an example, the inner electrically insulating part is cylindrically shaped.

In an example, the current carrying part of the switchgear is at least partially positioned at a central axis of the inner electrically insulating part.

In an example, the inner electrically conducting part is cylindrically shaped.

In an example, the outer electrically insulating part is cylindrically shaped.

In an example, there is provided a switchgear comprising at least one thermal link according to any if the above described examples.

There is also an associated method of manufacturing a thermal link. Thus, in an example a method of manufacturing a thermal link for a medium voltage switchgear comprises:
casting a thermally conducting electrically conducting part in an outer electrically insulating part, wherein the electrically conducting part comprises a first end portion comprising a first outer surface and a second end portion comprising a second outer surface and between the first end portion and the second end portion the electrically conducting part comprises a third outer surface, and wherein the casting is such that a first portion of an inner surface of the outer insulating part is in contact with a first portion of the third outer surface of the electrically conducting part;
adding a thermally conducting inner electrically insulating part in the outer electrically insulating part, wherein the inner electrically insulating part comprises a first end portion comprising a first outer surface and a second end portion comprising a second outer surface and between the first end portion and the second end portion the inner electrically insulating part comprises a third outer surface, and wherein the adding is such that the second outer surface of the electrically conducting part is in thermal contact with the first outer surface of the inner electrically insulating part; and
wherein, the first outer surface of the electrically conducting part is configured to be in thermal contact with a surface of a grounded part of a switchgear, and wherein the second surface of the inner electrically insulating part is configured to be in thermal contact with a surface of a current carrying part of the switchgear.

According to an example, adding the thermally conducting inner electrically insulating part comprises spacing a second portion of the inner surface of the outer insulating part from a first portion of the third outer surface of the inner electrically insulating part.

According to an example, the method comprises spacing the second portion of the inner surface of the outer insulating part from a junction between the second outer surface of the electrically conducting part and the first outer surface of the inner electrically insulating part

According to an example, the method comprises filling the space between the second portion of the inner surface of the outer insulating part and the first portion of third outer surface of the inner electrically insulating part with a potting material (42).

According to an example, during filling the space, the method comprises pressing the electrically conducting part against the inner electrically insulating part.

According to an example, the method comprises filling the space at the junction between the second outer surface of the electrically conducting part and the first outer surface of the inner electrically insulating part is filled with a potting material.

According to an example, during filling the space, the method comprises pressing the electrically conducting part against the inner electrically insulating part.

According to an example, the potting material is flexible.

According to an example, the potting material comprises silicone.

According to an example, casting the thermally conducting electrically conducting part in the outer electrically insulating part comprises forming a mechanical contact between the first portion of the inner surface of the outer insulating part and the first portion of the third outer surface of the electrically conducting part.

According to an example, the outer electrically insulating part comprises a first end portion comprising a first outer surface and comprises a second end portion comprising a second outer surface. Adding the thermally conducting inner electrically insulating part results in the first end portion and first outer surface of the thermally conducting inner electrically insulating part extending out of the second end portion of the outer electrically insulating part.

According to an example, the method comprises forming at least one screw threaded hole in the second portion of the outer electrically insulating part.

According to an example, the method comprises casting the thermally conducting electrically conducting part such that the first outer surface of the electrically conducting part is in the same plane as the first outer surface of the outer electrically insulating part.

According to an example, the method comprises forming at least one screw threaded hole in the electrically conducting part.

According to an example, the method comprises forming an outer surface of the outer electrically insulating part with grooves.

According to an example, the method comprises forming an outer surface of the outer electrically insulating part with ridges.

According to an example, the method comprises forming the third surface of the electrically conducting part with grooves.

According to an example, the method comprises forming the third surface of the electrically conducting part with ridges.

According to an example, the method comprises forming the first outer surface of the electrically conducting part, the second outer surface of the electrically conducting part, the first outer surface of the inner electrically insulating part, and the second outer surface of the inner electrically insulating part to exhibit a low roughness.

According to an example, adding the thermally conducting inner electrically insulating part in the outer electrically insulating part comprises utilization of a heat conductive paste between the second outer surface of the electrically conducting part and the first outer surface of the inner electrically insulating part.

According to an example, the heat conductive paste comprises a liquid metal.

According to an example, the electrically conducting part comprises Aluminium and/or copper.

According to an example, the inner electrically insulating part comprises a ceramic.

According to an example, the ceramic is Silicon carbide, Aluminium nitride, or Aluminium oxide.

According to an example, the outer electrically insulating part comprises epoxy and/or thermoplastic.

According to an example, the inner electrically insulating part is cylindrically shaped.

According to an example, the electrically conducting part is cylindrically shaped.

Continuing with the figures, Fig. 1 shows a cross-section of a detailed example of a thermal link 1. The conductor 10 is made of a standard conducting material, for example Aluminium or copper. The inner insulator 20 is made of a ceramic material that has high thermal conductivity, for example silicon carbide (SiC), aluminium nitride (AIN) or Aluminium oxide (AI2O3), although other suitable insulators can be utilized. The outer insulator 30 is made of a standard insulating material, for example epoxy or thermoplastics. The gap 40 is filled with a potting material 42, for example silicone that is more elastic than the material of the outer insulator. The steps of manufacture of the thermal link 1 are that at first the conductor 10 is casted in the outer insulator 30. Then, the inner insulator 20 is added and the gap 40 between the inner insulator and the outer insulator is filled with the potting material 42.

In a switchgear, the thermal link is fixed for example to a grounded wall 50 at its conductor side. This is achieved for example by using a central screw 51. At the side of the inner insulator, the thermal link is fixed for example to a busbar 60 using screws 61 into the outer insulator 30. As the inner insulator 20 is protruding from the outer insulator 30, the inner insulator 20 will be firmly pressed both onto the conductor 10 and onto the busbar 60. In this way good thermal contacts are established without the application of screws or the like directly to the inner insulator 20. As the inner insulator 20 is for example made of ceramics, it can be brittle, and screw connections can then result in local mechanical stress. The resulting risk of cracks in the inner insulator 20 can thus be avoided in the manner described above.

Mechanical stress can further originate from changing temperatures, especially when parts with different coefficients of thermal expansion are casted. If the conductor 10 and the inner insulator 20 were to be casted together in the same step of manufacturing, a variation of temperature would influence the thermal contact between the conductor 10 and the inner insulator 20. The worst case would be that a small gap appears between the conductor 10 and the inner insulator 20 and their direct mechanical and thermal contact is lost. In the past, when parts were being casted in epoxy, these parts have a fixed connection, e.g. with a screw. However, in the current case, the inner insulator 20 is made of a brittle material and direct screwing needs to be avoided. Thus, in the present described situation only the conductor 10 is cast in the outer insulator 30 in a first step. Then the inner insulator 20 is added and mechanically held in position with a fixture. Then, the gap 40 between the inner insulator 20 and the outer insulator 30 is filled with a potting material 42. This potting material has a certain flexibility after curing, so that it can compensate the small dimensional changes due to temperature variation. Together with the screwing of the outer insulator 30 to the busbar 60 with the screws 61, a reliable thermal contact of the inner insulator 20 both to the conductor 10 and to the busbar 60 is realised despite temperature variations. Optionally, the application of spring washers 62 can be used to further improve the insensitiveness to temperature variations and vibrations of the mechanical and thermal contact between the conductor 10 and the inner insulator 20 and between the inner insulator 20 and the busbar 60.

It has been found to be advantageous to press the inner insulator 20 against the conductor 10 when the gap 40 is filled with the potting material 42 and during the curing phase of 42 to avoid that potting material gets between the inner insulator 20 and conductor 10.

It has been found to advantageous to design and manufacture the surfaces of the conductor 10 and the inner insulator 20 even and with low roughness to support the transfer of heat and to further reduce the risk that potting material 42 can get between the conductor 10 and the inner insulator 20 before it is cured.

For increasing the transfer of heat between the conductor 10 and the inner insulator 20 and between the inner insulator 20 and the busbar 60, heat-conductive paste can be applied between the involved parts. As the inner insulator 20 is already electrically insulating, the paste can also be so-called liquid metal, provided that the incompatibility of gallium and aluminium in air is considered.

To avoid vertical loosening of the conductor 10 inside the outer insulator 30 due to the forces of screw 51 and screws 61, it is advantageous to increase the friction between the conductor 10 and the outer insulator 30 by roughening of the involved surface of part the conductor 10 prior to casting it into part 30, or to add rips or grooves or the like to the involved surface of the conductor 10.

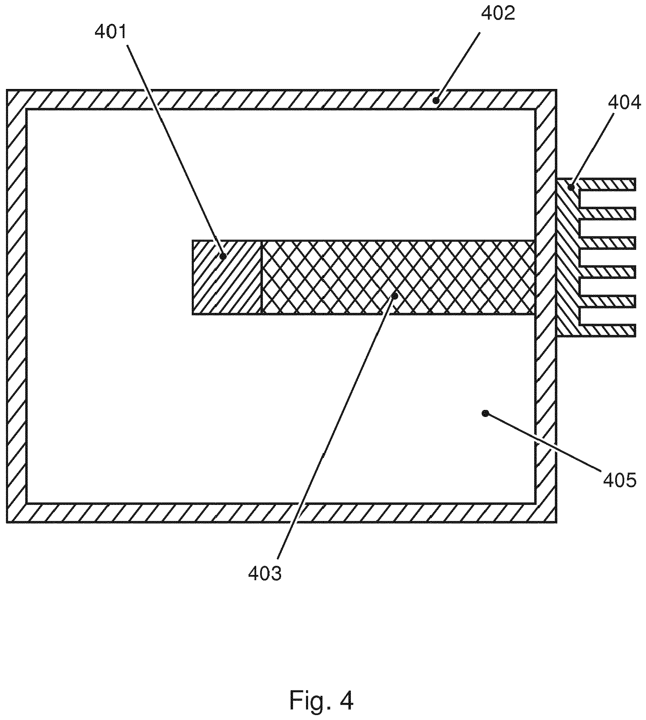

Figs. 4-13 show further examples of a thermal link for a medium voltage switchgear, which finds utility for other similar electrical equipment.

Fig. 4 shows a schematic example of a thermal link and an enclosure of a switchgear. As discussed above, in electrical devices thermal energy is generated, through for example ohmic heating, inside the open or closed earthed enclosure system. There is required to be some way to transfer the thermal energy through conduction, radiation, convection from inside the enclosure to environment the environment. In the present situation, this is achieved by the described thermal link that connects a current carrying part of the switchgear to an earthed enclosure of the switchgear, from which the thermal energy can be transferred via the thermal link from the current carrying part to the earthed enclosure, and then to the environment. In the present example, use is made of an insulating material with thermal conductivity k>10W/mK and good dielectric properties with dielectric strength E>5kV/mm. Such a material, is for example high thermal conductive ceramic Al2O3, Aluminium nitride, silicon nitride ceramic, thermal conductive epoxy, thermal conductive plastic, thermal conductive elastomer. Thus, as shown in Fig. 4 there is a high voltage current carrying, high power loss, high temperature part 401. There is also a low voltage (or earthed) low temperature and low power loss enclosure and/or thin layer 402. A thermal link 403 that has a high thermal conductive with low thermal resistance and dielectric insulation connects the current carrying part 401 to the enclosure 402. Attached to the enclose and/or thin layer is an extra heatsink 404, which is extra to the normal heatsink capability of the enclosure 402. Inside the enclosure 402 the environment 405 can be filled with gas, liquid or a solid insulation medium. Thus, the low thermal resistance thermal link 403 connects the current carrying part 401 and the earthed enclosure 402, and in this way the power loss or thermal energy generated by the current carrying part is transferred to the outside of the enclosure and/or thin layer by thermal conduction and further dissipated by the extra heatsink 404. It is to be noted that the enclosure can be closed or open, can be made of metal or just a layer of earthed material. The earthed enclosure and earthed layer can be closed (no gas or liquid exchange to external environments) or open (gas or liquid exchange to external environments). In an embodiment, three thermal links being used to transfer thermal energy from busbars that are internal to an enclosure to the environment outside of the enclosure, thereby providing a thermal bridge application.

The thermal conductive materials referred to above can be highly thermal conductive materials, for example range of thermal conductivity of 8 W/mK < A < 400 W/mK. For example, conductive plastics can for example have a thermal conductivity in the range of 8 W/mK, Al₂O₃ Ceramic can be in the range of about 21 W/mK, Aluminum nitride ceramics (AIN) can be in the range of 170-200 W/mK, and can theoretically be up to 380 W/mK.

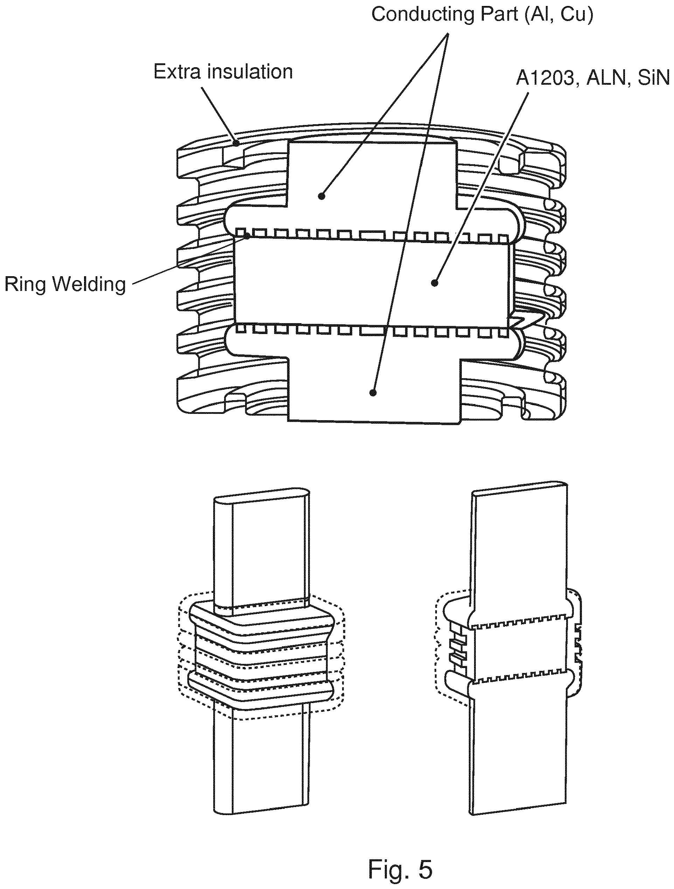

Fig. 5, shows a detailed schematic example of parts of a thermal link. An in an electrically insulating part, that is thermally conducting and can be Al2O3, AlN, SiN or similar materials is shown connected to conducting parts either side, and surrounded by extra outer electrical insulation. Such parts of the thermal link can be made by brazing, soldering and/or embedding processes. The conducting parts to either side can be Cu or Al, and in the middle is a high thermal conductive ceramic, Al2O3, ALN, SiN, external could be moulded in epoxy with compensation or in silicon rubber. Thus, by having conducting parts or terminals either side connection to the current carrying part of the switchgear at one end and to the earthed enclosure at the other end can be facilitated in certain examples. During construction the residual thermal mechanical stress between the ceramic and metal terminal(s) can be reduced by using rings or line welding 170.

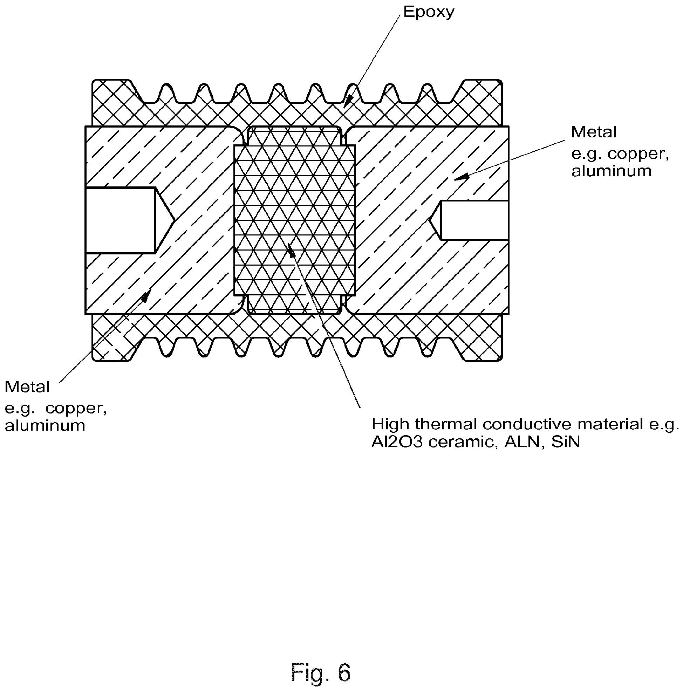

Fig. 6 shows a detailed schematic example of a thermal link, providing for a cylindrical solution. Here, for example metal parts such as copper or Aluminium are spaced either side of a central highly conductive material, e.g. Al₂O₃, AlN or SiN, with epoxy surrounding these parts. Thus, parts of a switchgear can be connected to the metal parts at either end of the thermal link.

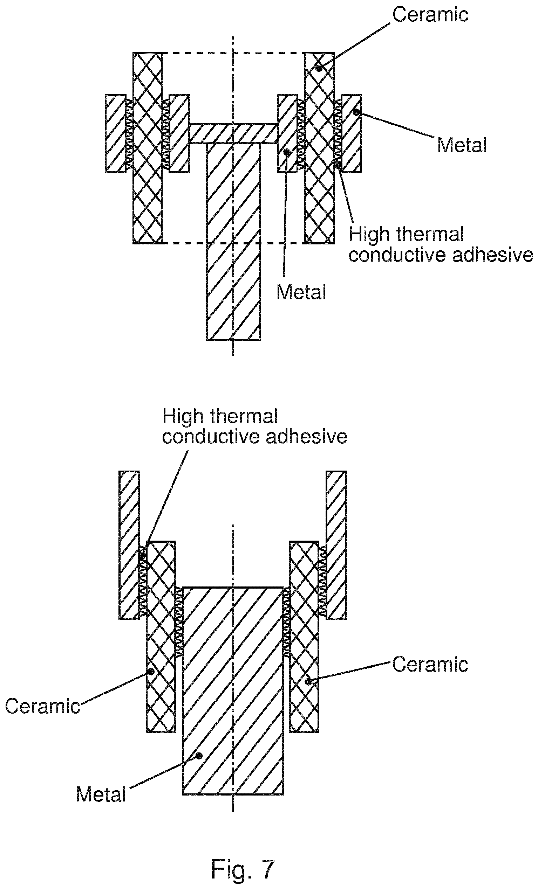

Fig. 7 shows a detailed schematic example of parts of a thermal link, providing for a cylindrical solution. Here, for example high thermal conductive glue can be used to glue and connect the ceramic and metal part, and then the other insulation materials can be moulded.

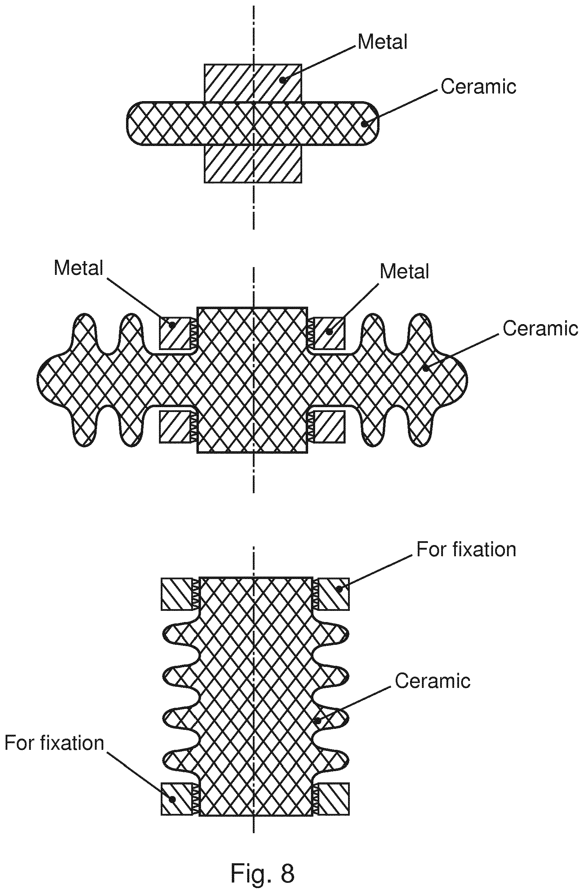

Fig. 8 shows a detailed schematic example of parts of a thermal link, providing for a disc solution using glue with a metal ring for fixation or soldering with low-temperature solder. In the first example, fixation is by soldering and the ceramic has a dimension such that the outer electrical insulating part can be minimised and even dispensed with. In the other examples, fixation is by glue of 2 metal insulator rings to the ceramic as a mechanical holder, which can also be fixed by screws to terminals.

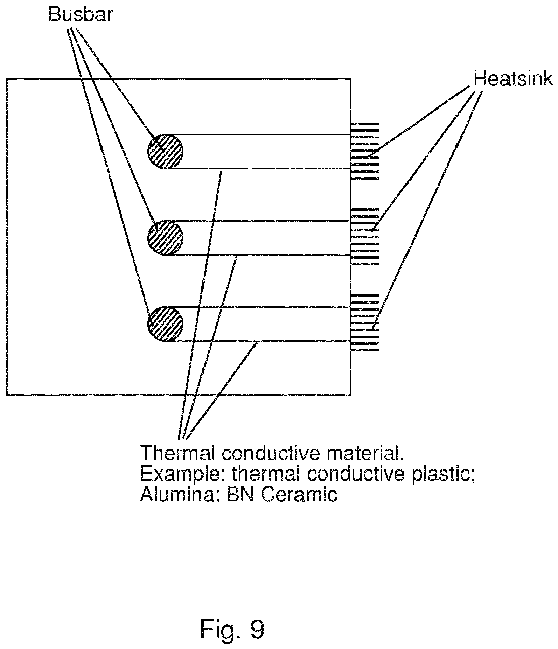

Fig. 9 shows a detailed schematic example of three thermal links being used to transfer thermal energy from busbars that are internal to the enclosure to the environment outside of the enclosure, thereby providing a thermal bridge application.

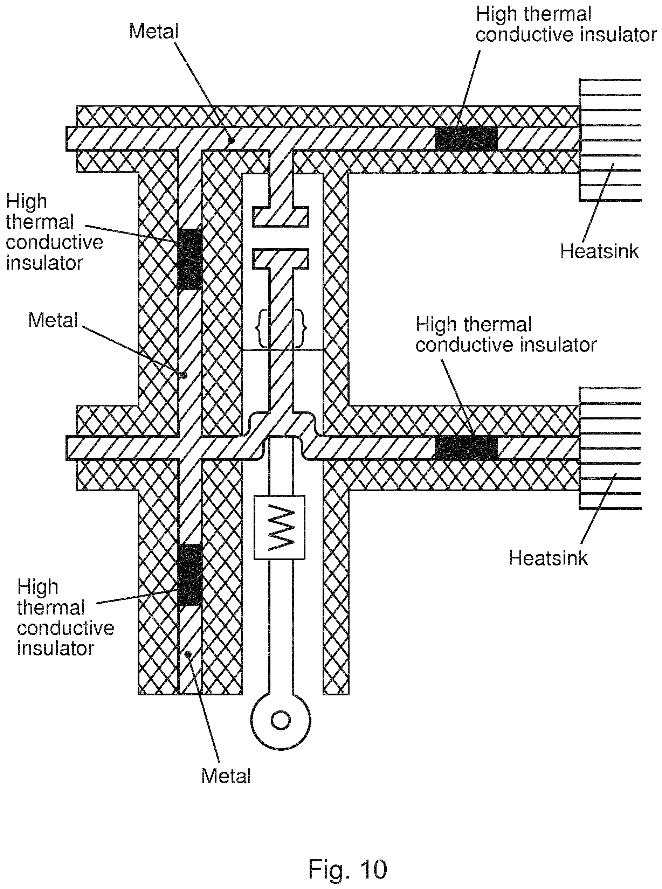

Fig. 10 shows a detailed schematic example of thermal links being used in a thermal bridge application for an embedded pole of a switchgear.

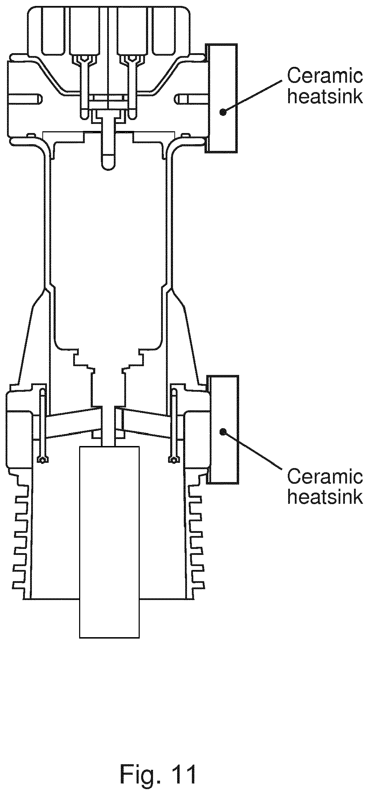

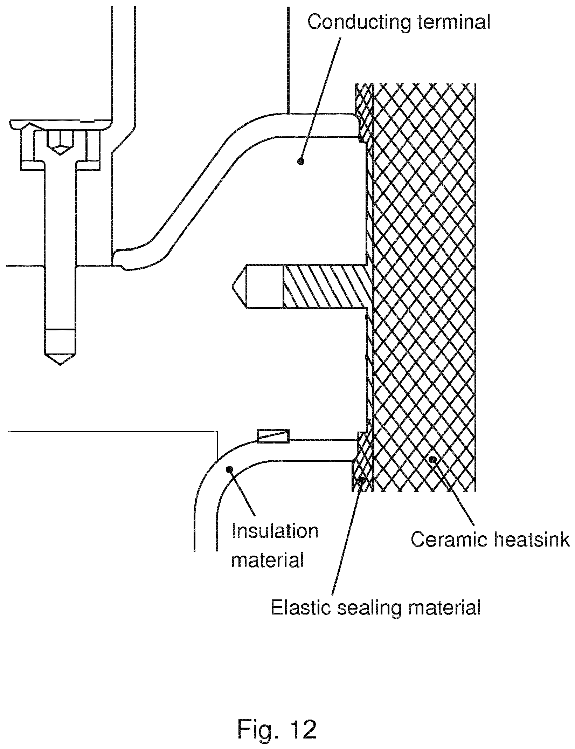

Fig. 11 shows a detailed representative example of thermal links being used, with ceramic disc with a brazed screw connected directly to an extended contact terminal of an embedded pole. Thus, in this way I dielectric sealed solutions provided that also provides for thermal transport for an internal pole part to an environment external to the pole part. Figs. 12-13 shows further details of the thermal link shown in Fig. 11, where the ceramic part is also providing for dielectric insulation, and provides good thermal convection and thermal radiative cooling to the surroundings.

Figs.14-25 relate to a thermal link associated with a bushing (for example, outside cone, solid insulated busbar and bushing in general), that again has utility for cooling of a current carrying element of a switchgear, such as a cable or busbar and the bushing. Thus, in an example there is thermal link 100 that has utility for a medium voltage switchgear and other such electrical equipment. The thermal link comprises an electrically conducting part 110, an inner electrically insulating part 120, and an outer electrically insulating part 130. The electrically conducting part is thermally conducting. The inner electrically insulating part is thermally conducting. The electrically conducting part comprises a first end portion and comprises a second end portion. The second end portion comprises a first outer surface and between the first end portion and the second end portion the electrically conducting part comprises a second outer surface. The inner electrically insulating part comprises a first end portion comprising a first outer surface and comprises a second end portion and between the first end portion and the second end portion the inner electrically insulating part comprises a third outer surface. The outer electrically insulating part comprises an inner surface. The first end portion of the electrically conducting part is in thermal contact with a current carrying part of a switchgear. The first outer surface of the electrically conducting part is in thermal contact with the first outer surface of the inner electrically insulating part. A first portion of the inner surface of the outer insulating part is in contact with a first portion of the second outer surface of the electrically conducting part.

According to an example, the thermal link comprises a heat sink comprising an inward facing surface. The second portion of the inner electrically insulating part comprises a second outer surface. The inward facing surface of the heat sink is in thermal contact with the second outer surface of the inner electrically insulating part.

According to an example, thermal contact between the heatsink and the inner electrically insulating part comprises utilization of a heat conductive paste between the heatsink and the heatsink.

According to an example, a second portion of the inner surface of the outer insulating part is spaced from a first portion of the third outer surface of the inner electrically insulating part.

According to an example, the first portion of the inner surface of the outer insulating part is in mechanical contact with the first portion of the second outer surface of the electrically conducting part.

According to an example, the electrically conducting part is cast in the outer electrically insulating part.

According to an example, at least a part of the first portion of the second outer surface of the electrically conducting part is roughened.

According to an example, at least a part of the first portion of the second outer surface of the electrically conducting part comprises ridges.

According to an example, at least a part of the first portion of the second outer surface of the electrically conducting part comprises grooves.

According to an example, the second portion of the inner surface of the outer insulating part is spaced from a junction between the first outer surface of the electrically conducting part and the first outer surface of the inner electrically insulating part.

According to an example, the space between the second portion of the inner surface of the outer insulating part and the first portion of the third outer surface of the inner electrically insulating part is filled with a potting material 142.

According to an example, the space at the junction between the first outer surface of the electrically conducting part and the first outer surface of the inner electrically insulating part is filled with a potting material.

According to an example, the potting material is flexible.

According to an example, the potting material comprises silicone.

According to an example, the outer electrically insulating part comprises a first end portion comprising a first outer surface and comprises a second end portion comprising a second outer surface. The second outer surface of the outer electrically insulating part is spaced from the inward facing surface of the heatsink.

According to an example, the thermal link is configured such that the first outer surface of the electrically conducting part is forced against the first outer surface of the inner electrically insulating part via a connection between the heatsink and the second portion of the outer electrically insulating part.

According to an example, the thermal link is configured such that the second surface of the inner electrically insulating part is forced against the inward facing surface of the heatsink via a connection between the heatsink and the second portion of the outer electrically insulating part.

According to an example, the connection between the heatsink and the second portion of the outer electrically insulating part comprises at least one screwed linkage 161.

According to an example, tightening of the at least one screwed linkage is configured to force the first outer surface of the electrically conducting part against the first outer surface of the inner electrically insulating part. Additionally or alternatively tightening of the at least one screwed linkage is configured to force the second surface of the inner electrically insulating part against the inward facing surface of the heatsink.

According to an example, the at least one screwed linkage comprises at least one spring washer 62.

According to an example, the first outer surface of the outer electrically insulating part is in contact with the current carrying part of the switchgear.

According to an example, the electrically conducting part is fixed to the current carrying part of the switchgear via a screwed linkage 90.

According to an example, an outer surface of the outer electrically insulating part comprises grooves.

According to an example, an outer surface of the outer electrically insulating part comprises ridges.

According to an example, the first outer surface of the electrically conducting part, the first outer surface of the inner electrically insulating part, and the second outer surface of the inner electrically insulating part exhibit a low roughness.

According to an example, the thermal contact between the first outer surface of the electrically conducting part and with the first outer surface of the inner electrically insulating part comprises utilization of a heat conductive paste.

According to an example, the heat conductive paste comprises a liquid metal.

According to an example, the electrically conducting part comprises aluminium and/or copper.

According to an example, the inner electrically insulating part comprises a ceramic.

According to an example, the ceramic is Silicon carbide, Aluminium nitride, or Aluminium oxide.

According to an example, the outer electrically insulating part comprises epoxy and/or thermoplastic.

According to an example, the current carrying part of the switchgear comprises a cable of the switchgear.

According to an example, the current carrying part of the switchgear comprises a busbar.

According to an example, the inner electrically insulating part is cylindrically shaped.

According to an example, the current carrying part of the switchgear is at least partially positioned at a central axis of the inner electrically insulating part.

According to an example, the electrically conducting part is cylindrically shaped.

Thus, the above relates to a bushing of a switchgear that has at least one thermal link and the above examples of a thermal link also find utility in a switchgear.

Continuing with the figures, Fig. 14 shows thermal links as a thermal bridge, in a first case integrated to a solid busbar and in a second case integrated to a cable connection.

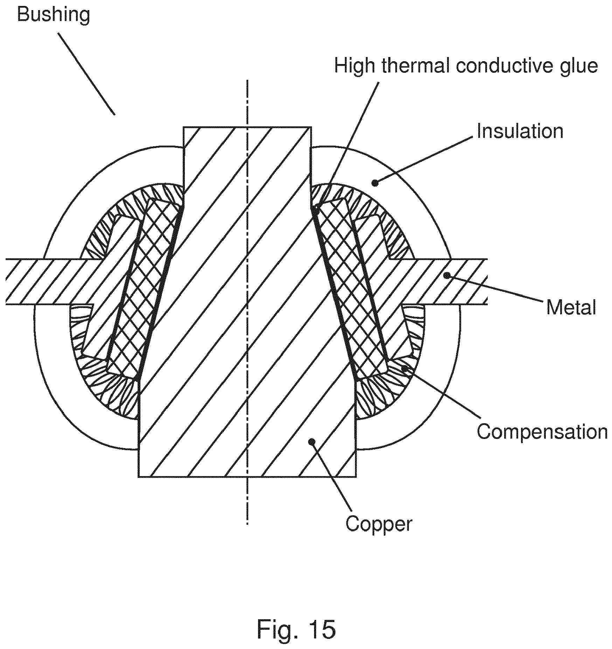

Figs. 15-17 show respectively thermal links with utility for a push through bushing, a cable bushing, and a busbar connection.

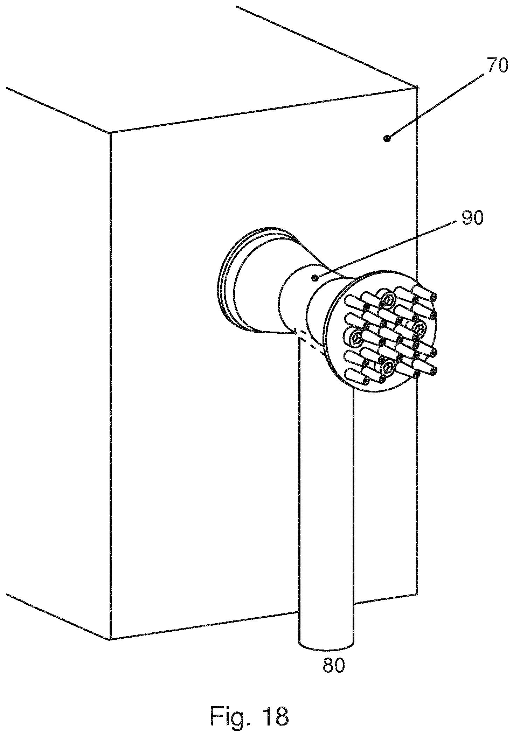

Figs. 18-19 show a further detailed example of a thermal link for a bushing. A state-of-the-art outer cone cable connector is shown along with a thermal link 100 as described herein. Thermal link 100 is in the plug that covers and insulates the screw that connects the cable to the bushing. A compartment 70 has an outer cone cable connection 71 with a conductor 72 and an insulator 73, for example made of epoxy. The core of the cable 80 is screwed onto the conductor 72 for electrical connection. The connection point is surrounded by the cable connector 95 that is for example mainly made of soft silicone rubber with an outer conductive surface that is grounded. The plug 100 that covers and insulates the head of the screw 90 is here the thermal link. The thermal link 100 comprises the conductor 110, the inner insulator 120, the outer insulator 130 and the gap 140 that is filled with the potting material 142. At the outer end of the plug, a heatsink 160 can be mounted with screws 161 to the thermal link. The heatsink should be electrically connected to ground potential. For the fixation of the plug 100, it will be screwed onto the outer thread of the screw 90, according to the state of the art. For tightening the plug a dedicated tool can be used that engages with the holes for the screws 161, or the heatsink can be used to rotate and tighten the plug 100 itself. As the final rotational position of the plug 100 cannot easily be determined, the heatsink has pins in this embodiment rather than ribs and thus convective cooling via upward movement of air is facilitated for all final orientations.

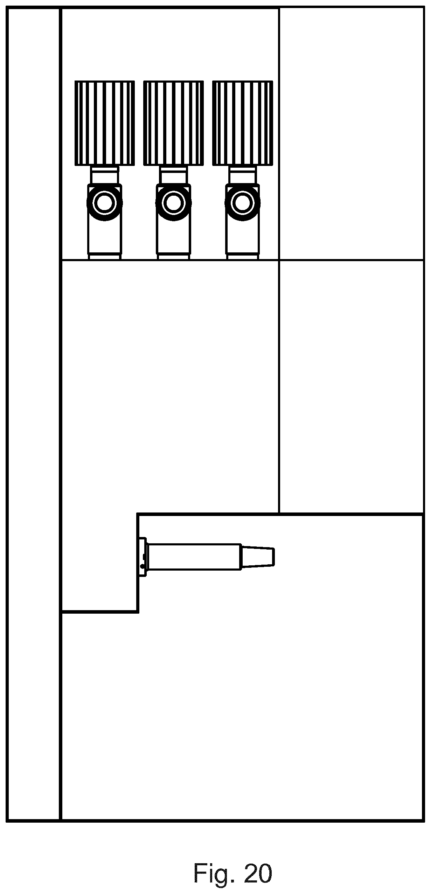

Figs. 20-25 shows further examples, and details relating to, thermal links for a bushing. For panels or switchgear, the temperature on the connecting area between the bus bar bushing solid busbar is very high especially for a high current rating of for example 2500A, which is problematic. However, an effective solution has been found that is to add a thermal link on the connection point between the busbar bushing and solid busbar as shown in Figs. 20-21 to provide for a completely new but effective solution. It had been verified by the thermal simulation and temperature rise tests, as discussed below.

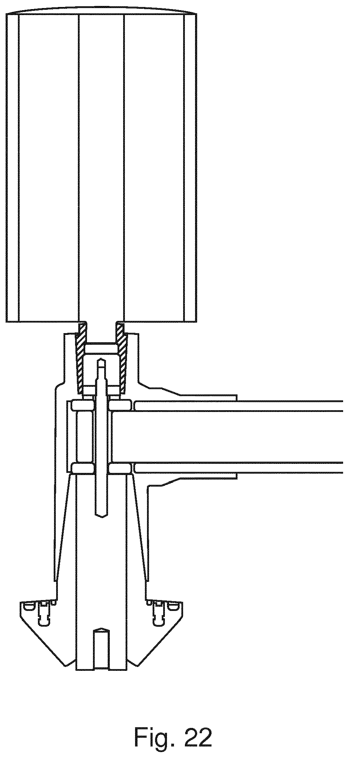

In the present detailed example, a new solution with lower cost and compact design is provided for utility with a switchgear (or panel) that fulfill with the requirement for the rating of 2500A filled with 1.0bar SF6 and 1.3bar dry air. The panel width is 800mm. The 2500A panel consists of one tank with circuit break and 3 position switch and one low voltage compartment and one cable compartment as shown in the Fig. 20. The solution is to provide one thermal link per phase, with a section view for the thermal link (or heat sink assembly) is shown in the Fig 22. As shown there is an adapter for the solid busbar, a solid busbar, a busbar bushing, a connection piece for the busbar and bushing, and a connecting bolt. There is a heat sink at the top, directly below which is an electrical insulation in high thermal conductivity part (this can be the same ceramic material as used for the vacuum interrupter), and a connection piece.

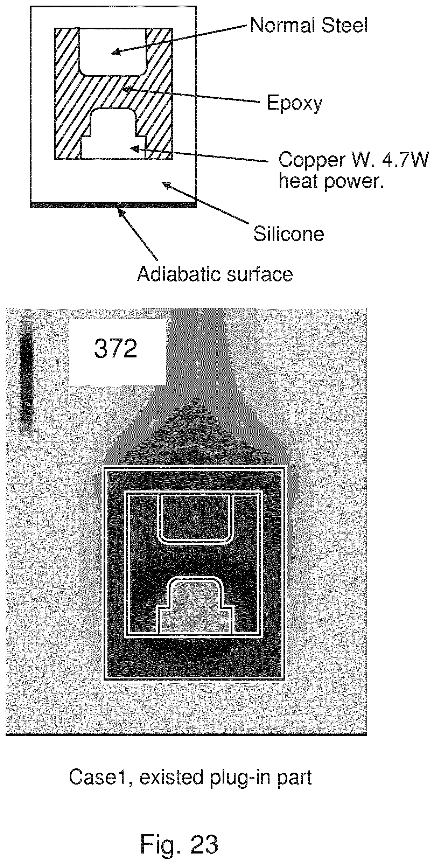

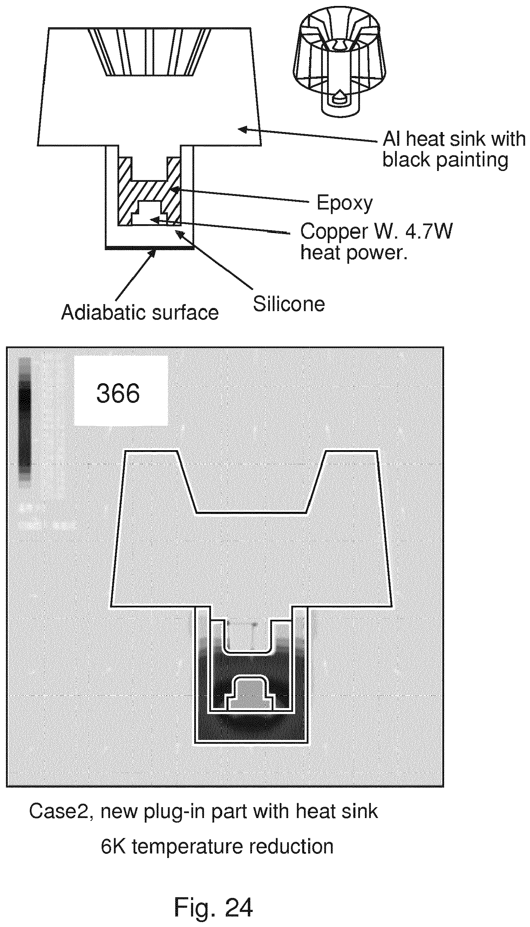

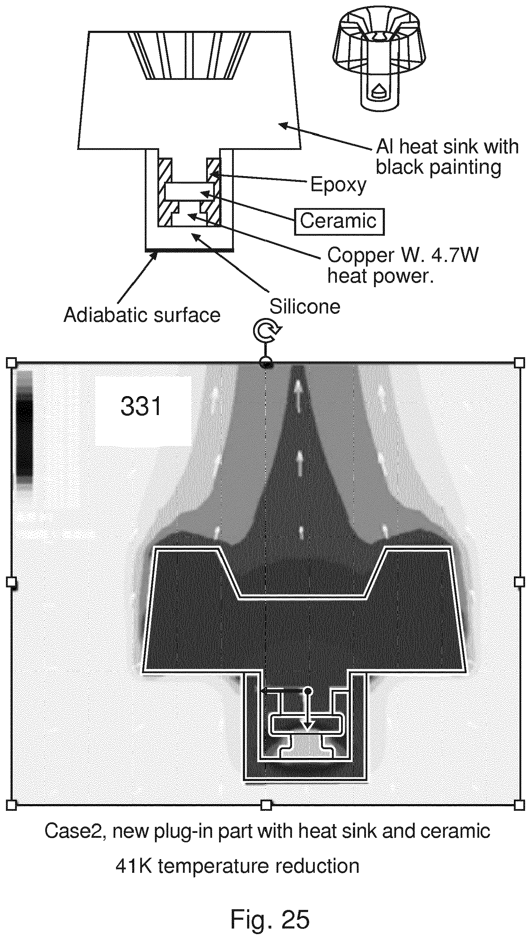

Figs. 23-25 show thermal simulation results. Fig. 23 shows the existing situation, prior to utilisation of the thermal link described here. Fig. 24 shows utilisation of a heatsink, with epoxy connecting the high temperature part to the heatsink and where a 6K temperature reduction has been effected. Fig. 25 then shows the complete new solution, where an electrically insulating and thermally conducting ceramic part connects the high temperature current carrying part of the switchgear to the heatsink, surrounding which is an electrically insulating epoxy and where a 41 K temperature reduction has been effected. The heatsink is connected to the earthing layer on the solid busbar.

Figs. 26-27 show examples of thermal conduction and electrical insulation considerations for the examples of the above described thermal links. Shown are mechanisms by which thermal conduction can be realised at the same time electrical insulation with proper dimensioning of the ceramic can be achieved, using screwed connections of parts for integration into gas insulated switchgear without brazing or clamping.

### Reference Numerals

- 1: Thermal link
- 10: Conductor
- 20: Inner insulator
- 30: Outer insulator
- 40: Gap
- 42: Potting material
- 50: Grounded wall
- 51: Screw
- 60: Busbar
- 61: Screw
- 62: Spring washer
- 70: Compartment
- 71: Outer cone cable connection
- 72: Conductor
- 73: Insulator
- 80: Cable
- 90: Screw
- 95: Cable connection
- 100: Plug and thermal link
- 110: Conductor
- 120: Inner insulator
- 130: Outer insulator
- 140: Gap
- 142: Potting material
- 160: Heatsink
- 161: Screw
- 170: Rings or line welding

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

## Claims

1. A thermal link (1) for a medium voltage switchgear, the thermal link comprising:
- an electrically conducting part (10);
- an inner electrically insulating part (20); and
- an outer electrically insulating part (30);
wherein, the electrically conducting part is thermally conducting;
wherein, the inner electrically insulating part is thermally conducting;
wherein, the electrically conducting part comprises a first end portion comprising a first outer surface and a second end portion comprising a second outer surface and between the first end portion and the second end portion the electrically conducting part comprises a third outer surface;
wherein, the inner electrically insulating part comprises a first end portion comprising a first outer surface and a second end portion comprising a second outer surface and between the first end portion and the second end portion the inner electrically insulating part comprises a third outer surface;
wherein, the outer electrically insulating part comprises an inner surface;
wherein, the first outer surface of the electrically conducting part is in thermal contact with a surface of a grounded part of a switchgear;
wherein, the second outer surface of the electrically conducting part is in thermal contact with the first outer surface of the inner electrically insulating part;
wherein, the second surface of the inner electrically insulating part is in thermal contact with a surface of a current carrying part of the switchgear; and
wherein, a first portion of the inner surface of the outer insulating part is in contact with a first portion of the third outer surface of the electrically conducting part.

2. Thermal link according to claim 1, wherein a second portion of the inner surface of the outer insulating part is spaced from a first portion of the third outer surface of the inner electrically insulating part.

3. Thermal link according to any of claims 1-2, wherein the first portion of the inner surface of the outer insulating part is in mechanical contact with the first portion of the third outer surface of the electrically conducting part.

4. Thermal link according to claim 2 or claim 3 when dependent upon claim 2, wherein the second portion of the inner surface of the outer insulating part is spaced from a junction between the second outer surface of the electrically conducting part and the first outer surface of the inner electrically insulating part.

5. Thermal link according to any of claims 1-4, wherein, the outer electrically insulating part comprises a first end portion comprising a first outer surface and comprises a second end portion comprising a second outer surface, and wherein the second outer surface of the outer electrically insulating part is spaced from the surface of the current carrying part of the switchgear.

6. Thermal link according to claim 5, wherein the thermal link is configured such that the second outer surface of the electrically conducting part is forced against the first outer surface of the inner electrically insulating part via a connection between the current carrying part of the switchgear and the second portion of the outer electrically insulating part and/or wherein the thermal link is configured such that the second surface of the inner electrically insulating part is forced against the surface of the current carrying part of the switchgear via a connection between the current carrying part of the switchgear and the second portion of the outer electrically insulating part.

7. A thermal link (100) for a medium voltage switchgear, the thermal link comprising:
- an electrically conducting part (110);
- an inner electrically insulating part (120); and
- an outer electrically insulating part (130);
wherein, the electrically conducting part is thermally conducting;
wherein, the inner electrically insulating part is thermally conducting;
wherein, the electrically conducting part comprises a first end portion and comprises a second end portion comprising a first outer surface and between the first end portion and the second end portion the electrically conducting part comprises a second outer surface;
wherein, the inner electrically insulating part comprises a first end portion comprising a first outer surface and comprises a second end portion and between the first end portion and the second end portion the inner electrically insulating part comprises a third outer surface;
wherein, the outer electrically insulating part comprises an inner surface;
wherein, the first end portion of the electrically conducting part is in thermal contact with a current carrying part of a switchgear;
wherein, the first outer surface of the electrically conducting part is in thermal contact with the first outer surface of the inner electrically insulating part; and
wherein, a first portion of the inner surface of the outer insulating part is in contact with a first portion of the second outer surface of the electrically conducting part.

8. Thermal link according to claim 7, wherein the thermal link comprises a heat sink comprising an inward facing surface; wherein the second portion of the inner electrically insulating part comprises a second outer surface; and wherein the inward facing surface of the heat sink is in thermal contact with the second outer surface of the inner electrically insulating part.

9. Thermal link according to any of claims 7-8, wherein a second portion of the inner surface of the outer insulating part is spaced from a first portion of the third outer surface of the inner electrically insulating part.

10. Thermal link according to any of claims 7-9, wherein the first portion of the inner surface of the outer insulating part is in mechanical contact with the first portion of the second outer surface of the electrically conducting part.

11. Thermal link according to claim 9 or claim 10 when dependent upon claim 9, wherein the second portion of the inner surface of the outer insulating part is spaced from a junction between the first outer surface of the electrically conducting part and the first outer surface of the inner electrically insulating part.

12. Thermal link according to any of claims 8-11, wherein, the outer electrically insulating part comprises a first end portion comprising a first outer surface and comprises a second end portion comprising a second outer surface, and wherein the second outer surface of the outer electrically insulating part is spaced from the inward facing surface of the heatsink.

13. A bushing of a switchgear comprising at least one thermal link according to any of claims 7-12.

14. A switchgear comprising at least one thermal link according to any of claims 1-6 or 7-12.

15. A method of manufacturing a thermal link (1) for a medium voltage switchgear, the method comprising:
casting a thermally conducting electrically conducting part (10) in an outer electrically insulating part (30), wherein the electrically conducting part comprises a first end portion comprising a first outer surface and a second end portion comprising a second outer surface and between the first end portion and the second end portion the electrically conducting part comprises a third outer surface, and wherein the casting is such that a first portion of an inner surface of the outer insulating part is in contact with a first portion of the third outer surface of the electrically conducting part;
adding a thermally conducting inner electrically insulating part (20) in the outer electrically insulating part, wherein the inner electrically insulating part comprises a first end portion comprising a first outer surface and a second end portion comprising a second outer surface and between the first end portion and the second end portion the inner electrically insulating part comprises a third outer surface, and wherein the adding is such that the second outer surface of the electrically conducting part is in thermal contact with the first outer surface of the inner electrically insulating part; and
wherein, the first outer surface of the electrically conducting part is configured to be in thermal contact with a surface of a grounded part of a switchgear, and wherein the second surface of the inner electrically insulating part is configured to be in thermal contact with a surface of a current carrying part of the switchgear.
